Europäisches Patentamt

European Patent Office

Office européen des brevets

(19)

(11) Numéro de publication : **0 091 010**
**B1**

(12) **FASCICULE DE BREVET EUROPÉEN**

(45) Date de publication du fascicule du brevet :
**22.10.86**

(21) Numéro de dépôt : **83102877.4**

(22) Date de dépôt : **23.03.83**

(51) Int. Cl.⁴ : **G 01 L   7/16, G 01 L   1/04**

(54) **Appareil permettant de mesurer des forces.**

(30) Priorité : **01.04.82 FR 8205847**

(43) Date de publication de la demande :
**12.10.83 Bulletin 83/41**

(45) Mention de la délivrance du brevet :
**22.10.86 Bulletin 86/43**

(84) Etats contractants désignés :
**AT BE CH DE GB IT LI LU NL SE**

(56) Documents cités :
**FR-A- 1 431 574**
**GB-A-   515 877**
**US-A- 3 145 570**

(73) Titulaire : **MICHELIN & CIE (Compagnie Générale des Etablissements Michelin) Société dite:**
**4 rue du Terrail**
**F-63000 Clermont-Ferrand (FR)**

(72) Inventeur : **Faure, Raymond**
**8 Lotissement Les Combes Route de Soulasse**
**F-63960 Veyre Monton (FR)**

(74) Mandataire : **Doussaint, Jean-Marie et al**
**MICHELIN & CIE Service K. Brevets**
**F-63040 Clermont-Ferrand Cedex (FR)**

## Description

L'invention concerne les appareils permettant de mesurer des forces. L'invention concerne par exemple les appareils permettant de mesurer des pressions par l'intermédiaire de forces dues à ces pressions. De tels appareils servent notamment à mesurer la pression de l'air qui se trouve à l'intérieur des enveloppes de pneumatiques.

Les appareils destinés à mesurer la pression d'un fluide utilisent en général des ressorts qui s'appuient sur des pistons où s'exerce la pression à mesurer, les ressorts permettant de mesurer la force due à l'action de la pression sur les pistons. De tels appareils sont décrits par exemple dans les brevets GB 515 877 et US 3 145 570.

L'étalonnage de ces appareils est délicat à effectuer car il est nécessaire de démonter au moins une pièce à plusieurs reprises lors de cet étalonnage, qui nécessite ainsi des tâtonnements successifs. Les appareils de mesure connus conduisent donc à des étalonnages qui occasionnent des réglages imparfaits, des pertes de temps et par suite des coûts de main-d'œuvre élevés.

Le but de l'invention est de résoudre ces inconvénients. En conséquence l'appareil conforme à l'invention permettant de mesurer des forces est caractérisé par les points suivants :

a) il comporte un ressort hélicoïdal disposé dans un corps ;

b) il comporte une pièce mobile dans le corps et soumise à l'action de la force à mesurer, cette pièce étant en contact avec une extrémité du ressort ;

c) il comporte des moyens permettant de visualiser la corrélation entre la position de cette pièce dans le corps et la valeur de la force ;

d) il comporte une pièce, dite douille de réglage, comportant un filetage extérieur susceptible de se visser dans un filetage intérieur du corps, cette douille étant en contact avec l'autre extrémité du ressort ;

e) la douille de réglage comporte un filetage intérieur dans lequel est susceptible de se visser le ressort hélicoïdal ;

f) les filetages extérieur et intérieur de la douille ont le même pas ;

g) il comporte des moyens susceptibles de s'unir avec des moyens amovibles pour bloquer le ressort ;

h) il comporte des moyens susceptibles de s'unir avec des moyens amovibles pour régler la position de la douille dans le corps ;

i) les moyens susceptibles de s'unir avec des moyens amovibles pour bloquer le ressort et les moyens susceptibles de s'unir avec des moyens amovibles pour régler la position de la douille dans le corps peuvent être mis en œuvre directement à partir de l'extérieur de l'appareil sans démonter cet appareil.

L'invention concerne également les ensembles constitués par l'appareil conforme à l'invention et par les moyens permettant de régler les positions de la douille de réglage et du ressort. L'invention concerne également les procédés permettant de régler l'appareil conforme à l'invention.

L'exemple qui suit ainsi que les figures schématiques du dessin correspondant à cet exemple sont destinés à illustrer l'invention et à en faciliter la compréhension sans toutefois en limiter la portée.

Sur le dessin :

la figure 1 représente en coupe un appareil de mesure et un ensemble conformes à l'invention, la coupe étant effectuée le long de l'axe du ressort de cet appareil ;

la figure 2 représente vue de face une extrémité du ressort de l'appareil représenté à la figure 1 ;

la figure 3 représente en coupe deux positions de l'appareil et de l'ensemble représentés à la figure 1, au cours de deux opérations de réglage, ces deux positions étant séparées par l'axe du ressort de cet appareil, la coupe étant effectuée le long de cet axe.

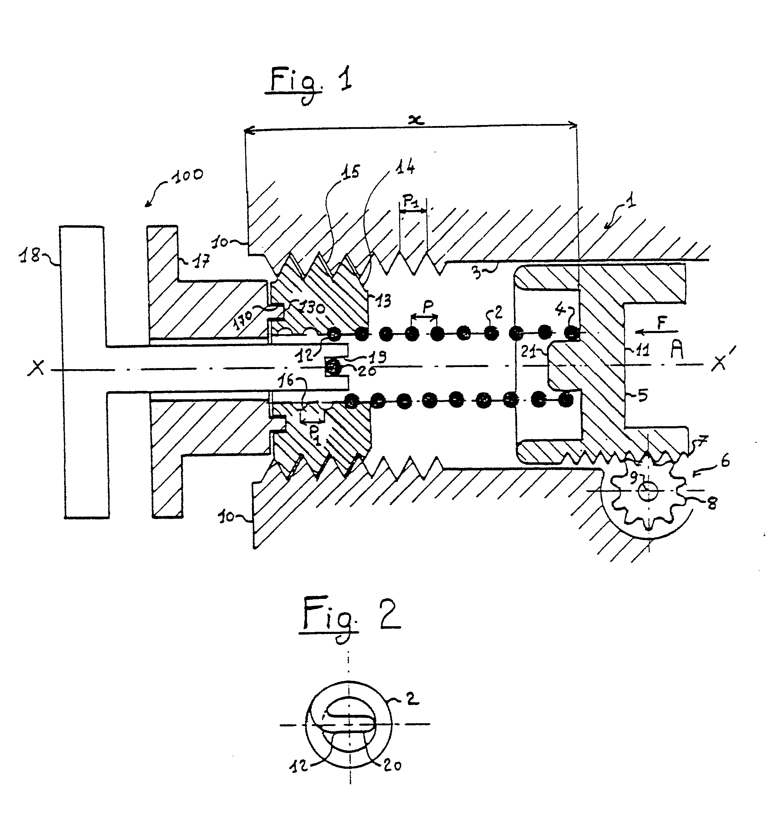

On voit à la figure 1 un appareil de mesure 1 conforme à l'invention. Cet appareil 1 comporte un ressort hélicoïdal 2 disposé dans un corps 3. Le pas P des spires utiles du ressort 2 varie en fonction de la force appliquée sur ce ressort, cette force étant symbolisée par la flèche F, mais ce pas est constant pour une force donnée. XX' représente l'axe du ressort 2. L'extrémité 4 du ressort 2 est en contact avec une pièce 5 mobile dans le corps 3 et soumise à l'action de la force F. Cette pièce 5 est par exemple un piston qui se déplace dans le corps 3 sous l'action de la force F. L'appareil 1 comporte des moyens connus qui permettent de visualiser la corrélation entre la position du piston 5 dans le corps 3 et la valeur de la force F.

Ces moyens 6 comportent par exemple une crémaillère 7 qui entraîne en rotation une roue dentée 8 autour d'un axe fixe 9. La rotation de la roue 8 permet de faire pivoter une aiguille sur un cadran en fonction de la position du piston 5 dans le corps 3, c'est-à-dire en fonction de la distance x qui sépare le piston 5 d'un point fixe du corps 3, par exemple son extrémité 10. Dans un but de simplification l'aiguille et le cadran ne sont pas représentés sur le dessin. La position du piston 5 dans le corps 3, c'est-à-dire la distance x, varie en fonction de la force F, c'est-à-dire que la position de l'aiguille sur le cadran varie en fonction de la force F.

La force F est par exemple obtenue par l'action de la pression d'un fluide A, notamment d'un gaz, sur la face 11 du piston 5 opposée au ressort 2. Dans ce cas les moyens 6 précédemment mentionnés permettent de visualiser la corrélation entre la position du piston 5 et la pression du fluide A, le cadran, s'il est utilisé, étant alors gradué en unités de pression, par exemple en bars.

L'autre extrémité 12 du ressort 2 est en contact avec une pièce 13, dite douille de réglage,

comportant un filetage extérieur 14 susceptible de se visser dans un filetage intérieur 15 du corps 3. La douille de réglage 13 comporte un filetage intérieur 16 dans lequel est susceptible de se visser le ressort 2. Les filetages 14, 15, 16 ont le même pas $P_1$, ce pas $P_1$ étant égal au pas du ressort 2 lorsqu'il est déformé sous l'action d'une force déterminée $F_1$. Les spires utiles du ressort 2 sont situées entre la douille 13 et le piston 5. La douille 13 peut se visser dans le corps 3 grâce à une clé amovible 17 que l'on met au contact de la douille 13 au moment des réglages. Pour entraîner la douille 13 en rotation, la clé 17 comporte par exemple des tenons 170 qui pénètrent dans des évidements correspondants 130 de la douille 13. Pour que le ressort 2 se visse ou se dévisse dans le filetage intérieur 16 de la douille 13, il suffit d'utiliser des moyens permettant de bloquer le ressort 2 pendant que l'on visse ou dévisse la douille 13 dans le corps 3. Ces moyens sont réalisés par exemple avec une clé amovible 18 que l'on peut déplacer axialement à l'intérieur de la clé 17 qui a alors la forme d'un cylindre creux. Cette clé 18 comporte par exemple une gorge 19 dans laquelle peut venir se loger une portion 20 de l'extrémité 12 du ressort 2, cette portion 20 étant obtenue par exemple en pliant l'extrémité du fil constituant le ressort 2, ce pli étant réalisé vers l'intérieur du ressort, comme représenté à la figure 2.

Les évidements 130 constituent des moyens qui permettent de régler la position de la douille 13 dans le corps 3 et la portion 20 du ressort 2 constitue un moyen qui permet de bloquer le ressort 2. Ces moyens 130, 20, qui font partie de l'appareil 1, peuvent être mis en œuvre directement à partir de l'extérieur de l'appareil 1, sans démonter cet appareil, c'est-à-dire qu'ils sont accessibles directement de l'extérieur. Les clés amovibles 17, 18 constituent des moyens pour régler les positions de la douille 13 et du ressort 2 dans le corps 3, la réunion de l'appareil 1 et des moyens 17, 18, constituant l'ensemble 100. Il va de soi qu'au moins un de ces moyens 17, 18 pourrait être éventuellement intégré à l'appareil 1 de façon permanente.

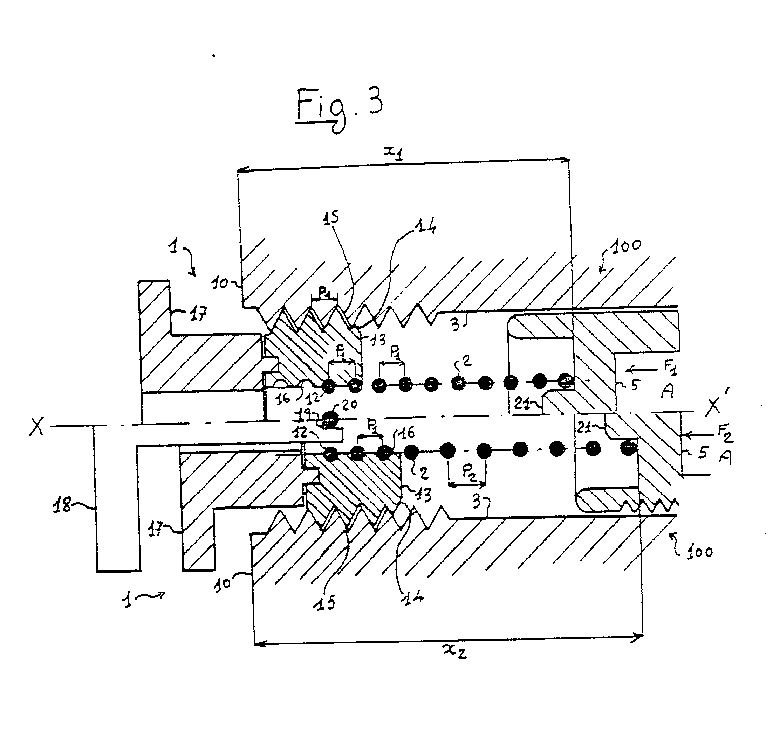

Le réglage de l'appareil 1 est effectué de la manière suivante. On visse l'extrémité 12 du ressort 2 dans la douille 13, grâce au filetage 16, on visse ensuite la douille 13 dans le corps 3, grâce aux filetages 14, 15, les spires utiles du ressort 2 étant disposées du côté du piston 5. On applique ensuite sur le ressort 2 par l'intermédiaire du piston 5 la force $F_1$ prédéterminée et étalonnée, les spires utiles du ressort 2 ayant ainsi le pas $P_1$ identique au pas des filetages 14, 15, 16. On règle ensuite la distance $x_1$ du piston 5, par rapport à l'extrémité 10, en vissant ou dévissant la douille 13 dans le corps 3 sans bloquer le ressort 2 avec la clé 18, la force $F_1$ étant toujours appliquée sur le ressort 2. La distance $x_1$ est déterminée de façon à ce que l'aiguille sur le cadran coïncide avec la graduation correspondant à la force $F_1$. On applique ensuite sur le ressort 2 une deuxième force étalonnée $F_2$. On bloque alors le ressort 2 avec la clé 18 et on règle la distance $x_2$ du piston 5 par rapport à l'extrémité 10 en vissant ou dévissant la douille 13 dans le corps 3, la force $F_2$ étant toujours appliquée sur le ressort 2. La distance $x_2$ est déterminée de façon à ce que l'aiguille sur le cadran coïncide avec la graduation correspondant à la force $F_2$. Etant donné que le ressort 2 est bloqué lors de cette deuxième opération de réglage, on modifie le nombre de spires utiles du ressort 2 qui se visse ou se dévisse dans le filetage 16 au cours de cette deuxième opération, ces spires utiles ayant alors un pas $P_2$ différent de $P_1$. Grâce au choix du pas $P_1$, la distance $x_1$ correspondant à la force $F_1$ reste inchangée malgré cette deuxième opération de réglage. La position de l'appareil 1 et de l'ensemble 100 à la fin de chacune des deux opérations de réglage précitées est représentée à la figure 3. Etant donné que la relation entre la force F et la distance x est linéaire dans le domaine de forces F considéré, l'étalonnage avec les deux forces $F_1$, $F_2$ garantit une mesure correcte pour tout ce domaine de forces. L'étalonnage de l'appareil 1 s'effectue de façon très simple, sans démontage intermédiaire et sans tâtonnement d'où un coût de main-d'œuvre réduit. Le centrage du ressort 2 pendant ces réglages et pendant le fonctionnement de l'appareil 1 est obtenu par exemple grâce à une pièce cylindrique 21 disposée à l'intérieur du ressort 2 (figure 1).

Lorsque l'étalonnage de l'appareil est terminé, on peut, si on le désire, utiliser des moyens connus pour éviter que cet appareil se dérègle pendant son utilisation, ces moyens permettant par exemple de bloquer la douille de réglage pour empêcher ses déplacements dans le corps.

Bien entendu, l'invention n'est pas limitée à l'exemple de réalisation ci-dessus décrit.

**Revendications**

1. Appareil (1) permettant de mesurer des forces, cet appareil présentant les caractéristiques suivantes :

   a) il comporte un ressort hélicoïdal (2) disposé dans un corps (3) ;

   b) il comporte une pièce (5) mobile dans le corps (3) et soumise à l'action de la force à mesurer, cette pièce étant en contact avec une extrémité (4) du ressort (2) ;

   c) il comporte des moyens (6) permettant de visualiser la corrélation entre la position de cette pièce (5) dans le corps (3) et la valeur de la force ;

   d) il comporte une pièce (13), dite douille de réglage, comportant un filetage extérieur (14) susceptible de se visser dans un filetage intérieur (15) du corps (3), cette douille (13) étant en contact avec l'autre extrémité (12) du ressort (2) ;

   e) la douille de réglage (13) comporte un filetage intérieur (16) dans lequel est susceptible de se visser le ressort hélicoïdal (2) ;

   f) les filetages extérieur (14) et intérieur (16) de la douille (13) ont le même pas ($P_1$) ;

g) il comporte des moyens (20) susceptibles de s'unir avec des moyens amovibles (18) pour bloquer le ressort (2) ;

h) il comporte des moyens (130) susceptibles de s'unir avec des moyens amovibles (17) pour régler la position de la douille (13) dans le corps (3) ;

i) les moyens (20) susceptibles de s'unir avec des moyens amovibles (18) pour bloquer le ressort (2) et les moyens (130) susceptibles de s'unir avec des moyens amovibles (17) pour régler la position de la douille (13) dans le corps (3) peuvent être mis en œuvre directement à partir de l'extérieur de l'appareil (1) sans démonter cet appareil.

2. Appareil selon la revendication 1 caractérisé en ce que la pièce mobile soumise à l'action de la force à mesurer est un piston.

3. Appareil selon l'une quelconque des revendications 1 ou 2 caractérisé en ce que les moyens (20) susceptibles de s'unir avec des moyens amovibles (18) pour bloquer le ressort (2) sont constitués par une extrémité pliée du ressort.

4. Appareil selon l'une quelconque des revendications 1 à 3 caractérisé en ce que les moyens (130) susceptibles de s'unir avec des moyens amovibles (17) pour régler la position de la douille (13) dans le corps (3) sont constitués par des évidements de la douille (13).

5. Appareil selon l'une quelconque des revendications 1 à 4 caractérisé en ce qu'il permet de mesurer la pression d'un fluide par l'intermédiaire de la force due à cette pression.

6. Ensemble (100) constitué par un appareil (1) conforme à l'une quelconque des revendications 1 à 5 et par des moyens (17, 18) permettant de régler les positions de la douille de réglage (13) et de bloquer le ressort (2) dans le corps (3), ces moyens étant amovibles.

7. Ensemble selon la revendication 6 caractérisé en ce que ces moyens comportent une clé amovible (17) susceptible d'entraîner la douille (13) en rotation et une clé amovible de verrouillage (18) susceptible de bloquer le ressort (2), ou sont constitués de ces clés.

8. Ensemble selon la revendication 7 caractérisé en ce que la clé de verrouillage (18) coulisse à l'intérieur de la clé amovible (17) susceptible d'entraîner la douille (13) en rotation, cette clé amovible d'entraînement en rotation ayant la forme d'un cylindre creux.

9. Procédé permettant de régler un appareil (1) conforme à l'une quelconque des revendications 1 à 5, le procédé comportant les étapes suivantes : on applique sur le ressort (2) une force étalonnée de telle sorte que les spires utiles du ressort (2) aient un pas égal au pas des filetages extérieur (14) et intérieur (16) de la douille (13), on règle alors la position de la pièce mobile (5) dans le corps (3), en vissant ou dévissant la douille de réglage (13), sans bloquer le ressort (2), pour que les moyens de corrélation (6) correspondent à la valeur de cette force étalonnée, on applique ensuite sur le ressort (2) une autre force étalonnée, de telle sorte que les spires utiles du ressort aient un pas différent du pas des filetages extérieur (14) et intérieur (16) de la douille (13), et enfin l'on règle alors la position de la pièce mobile (5) dans le corps (3), en vissant ou dévissant la douille de réglage (13) tout en bloquant le ressort (2), pour que les moyens de corrélation (6) correspondent à la valeur de cette autre force étalonnée.

**Claims**

1. An apparatus (1) for measuring forces characterized by the following features :

a) it has a coil spring (2) within a body (3) ;

b) it has a movable part (5) within the body (3), the movable part (5) being subjected to the action of the force to be measured and being in contact with one end (4) of the coil spring (2) ;

c) it has means (6) which make it possible to visualize the correlation between the position of the movable part (5) within the body (3) and the value of the force ;

d) it has a part (13), referred to as « adjustment sleeve », with an external thread (14) which can be screwed into an internal thread (15) of the body (3), the adjustment sleeve (13) being in contact with the other end (12) of the coil spring (2) ;

e) the adjustment sleeve (13) has an internal thread (16) within which the coil spring (2) can be screwed ;

f) the external (14) and internal (16) threads of the adjustment sleeve (13) have the same pitch $(P_1)$ ;

g) it has means (20) which can combine with movable means (18) to lock the coil spring (2) ;

h) it has means (130) which can combine with movable means (17) to adjust the position of the adjustment sleeve (13) within the body (3) ;

i) the means (20) which can combine with movable means (18) to lock the coil spring (2) and the means (130) which can combine with movable means (17) to adjust the position of the adjustment sleeve (13) within the body (3) may be actuated directly from outside of the apparatus (1) without taking the apparatus apart.

2. An apparatus according to claim 1, characterized by the fact that the movable part subjected to the action of the force to be measured is a piston.

3. An apparatus according to any one of claims 1 or 2 characterized by the fact that the means (20) which can combine with movable means (18) to lock the coil spring (2) are formed of a bent end of the coil spring.

4. An apparatus according to any one of claims 1 to 3, characterized by the fact that the means (130) which can combine with movable means (17) to adjust the position of the adjustment sleeve (13) within the body (3) are made from recesses in the adjustment sleeve (13).

5. An apparatus according to any one of claims 1 to 4, characterized by the fact that it permits the measurement of the pressure of a fluid via the force due to said pressure.

6. An assembly (100) formed by an apparatus (1) according to any one of claims 1 to 5 and by means (17, 18) which make it possible to adjust the positions of the adjustment sleeve (13) and to lock the coil spring (2) within the body (3), these means being movable.

7. An assembly according to claim 6, characterized by the fact that said means comprise a movable key (17) capable of driving the adjustment sleeve (13) in rotation and a movable locking key (18) capable of locking the coil spring (2), or are formed of these keys.

8. An assembly according to claim 7, characterized by the fact that the locking key (18) can be shifted axially within the movable key (17) capable of driving the adjustment sleeve (13) in rotation, this movable key for driving in rotation having the shape of a hollow cylinder.

9. A method for adjusting an apparatus (1) according to any one of claims 1 to 5, said process comprising the following steps : a calibrated force is applied to the coil spring (2) in such a manner that the useful turns of the coil spring (2) have a pitch equal to the pitch of the external (14) and internal (16) threads of the adjustment sleeve (13), and the position of the movable part (5) within the body (3) is then adjusted, by screwing or unscrewing the adjustment sleeve (13), without locking the coil spring (2), so that the correlation means (6) correspond to the value of said calibrated force, another calibrated force is then applied to the coil spring (2) in such a manner that the useful turns of the coil spring have a pitch different from the pitch of the external (14) and internal (16) threads of the adjustment sleeve (13), and finally the position of the movable part (5) within the body (3) is then adjusted by screwing or unscrewing the adjustment sleeve (13) while locking the coil spring (2) so that the correlation means (6) correspond to the value of this other calibrated force.

**Patentansprüche**

1. Meßvorrichtung (1) um Kräfte zu messen, die die folgenden Kennzeichen besitzt :

a) sie weist eine Schraubenfeder (2) in einem Gehäuse (3) auf ;

b) sie weist einen beweglichen Teil (5) im Körper (3) auf, der der zu messenden Kraft unterworfen ist und der im Kontkakt mit einem Ende (4) der Feder (2) steht ;

c) sie weist Mittel (6) auf, die es erlauben, den Zusammenhang zwischen der Position dieses Teiles (5) im Körper (3) und der Größe der Kraft sichtbar zu machen ;

d) sie weist einen Teil (13), nämlich eine Regelhülse, die ein Außengewinde (14) trägt, welches in ein Innengewinde (15) des Körpers (3) einschraubbar ist, wobei die Hülse (13) am anderen Ende (12) der Feder (2) anliegt, auf ;

e) die Regelhülse (13) weist ein Innengewinde (16) auf, in das die Schraubenfeder (2) einschraubbar ist ;

f) das Außengewinde (14) weist dieselbe Ganghöhe ($P_1$) auf, wie das Innengewinde (16) ;

g) es sind Mittel (20) vorgesehen, die sich mit austauschbaren Mitteln (18) vereinen können, um die Feder (2) zu fixieren ;

h) es sind Mittel (130) vorgesehen, die sich mit austauschbaren Mitteln (17) verbinden können, um die Position der Hülse (13) im Körper (3) einzustellen ;

i) die Mittel (20), die sich mit den austauschbaren Mitteln (18) zum Zwecke des Fixierens der Feder (2) verbinden können und die Mittel (130), die sich mit den austauschbaren Mitteln (17) zum Zwecke der Regulierung der Position der Hülse (13) im Körper (3) verbinden können, können direkt vom Außenraum der Vorrichtung (1) betätigt werden, ohne diese zu zerlegen.

2. Vorrichtung nach Anspruch 1, dadurch gekennzeichnet, daß der bewegliche Teil, der der zu messenden Kraft ausgesetzt ist, ein Kolben ist.

3. Vorrichtung nach Anspruch 1 oder 2, dadurch gekennzeichnet, daß die Mittel (20), die sich mit den austauschbaren Mitteln (18) zum Fixieren der Feder (2) verbinden können, aus einer Umbiegung des Federendes bestehen.

4. Vorrichtung nach einem der Ansprüche 1 bis 3, dadurch gekennzeichnet, daß die Mittel (130), die sich mit den austauschbaren Mitteln (17) zum Regeln der Position der Hülse (13) im Körper (3) verbinden können, Vertiefungen in der Hülse (13) sind.

5. Vorrichtung nach einem der Ansprüche 1 bis 4, dadurch gekennzeichnet, daß es erlaubt, Fluiddruck mit Hilfe der durch diesen Druck hervorgerufenen Kraft zu messen.

6. Gesamtheit (100), bestehend aus einer Vorrichtung (1) nach einem der Ansprüche 1 bis 5 und Mitteln (17, 18) die es erlauben, die Position der Regelhülse (13) zu regeln und die Feder (2) im Körper (3) zu fixieren, wobei diese Mittel austauschbar sind.

7. Gesamtheit nach Anspruch 6, dadurch gekennzeichnet, daß diese Mittel einen abziehbaren Schlüssel (17), mit dem die Hülse (13) verdreht werden kann und einem abziehbaren Sperrschlüssel (18), der die Feder (2) fixieren kann, aufweisen oder aus diesen Schlüsseln besteht.

8. Gesamtheit nach Anspruch 7, dadurch gekennzeichnet, daß der Sperrschlüssel (18) im Inneren des abziehbaren Schlüssels (17) mit dem die Hülse (13) verdreht werden kann, gleitet, wobei dieser Verdrehschlüssel die Form eines Hohlzylinders aufweist.

9. Verfahren zur Justierung und Eichung einer Vorrichtung (1) nach einem der Ansprüche 1 bis 5, wobei das Verfahren die folgenden Schritte aufweist : man übt auf die Feder (2) eine solche Kraft aus, daß die wirksamen Windungen der Feder (2) eine Ganghöhe aufweisen, die gleich ist, der Ganghöhe des Außengewindes (14) und des Innengewindes (16) der Hülse (13) und regelt dann die Position des beweglichen Teils (5) im Körper (3), indem man die Regelhülse (13) ein- oder ausschraubt, ohne die Feder (2) zu fixieren, wobei die Übertragungsmittel (6), die Größe der angewandten Kraft anzeigen ; anschließend läßt man auf die Feder (2) eine andere Kraft wirken, die so gewählt ist, daß die Ganghöhe der wirksamen Windungen der Feder unterschiedlich von der Ganghöhe des Außengewindes (14) und Innengewindes (16) der Hülse (13) sind und schließlich regelt man die Position des beweglichen Teils (5) im Körper (3), indem man die Regelhülse (13) ein- oder ausschraubt, während die Feder (2) fixiert ist, bis die Übertragungsmittel (6) die Größe dieser anderen Kraft anzeigen.

0 091 010

Fig. 1

Fig. 2

1

# Fig. 3